# EUROPEAN PATENT APPLICATION

(11) **EP 4 641 913 A1**
(43) Date of publication of application: **29.10.2025**
(21) Application number: 25160783.4
(22) Date of filing: 28.02.2025
(51) Int. Cl.: H02P 3/14, B23D 57/00, B25F 5/00, H02P 3/22

(54) **BATTERY SUPPLIED POWER TOOL WITH ENERGY FEEDBACK**

(30) Priority: 26.04.2024 CN 202410512429
(71) Applicant: Nanjing Chervon Industry Co., Ltd., Nanjing, Jiangsu 211106 (CN)
(72) Inventor: WANG, Hailong, Nanjing (CN); DUAN, Junya, Nanjing (CN)
(74) Representative: Sun, Yiming

(57) **Abstract**

A power tool includes a motor including a rotor and multiple phases of stator windings; a battery pack supplying power to at least the motor; and a control circuit for controlling the motor to rotate or brake. The control circuit includes a driver circuit including multiple high-side switching elements and multiple low-side switching elements; and a controller electrically connected to at least the driver circuit and outputting a control signal to control the states of the multiple high-side switching elements and the multiple low-side switching elements. The controller is configured to: in response to a brake signal, control the driver circuit to operate in an energy feedback state and adjust the duty cycle of the control signal to adjust the magnitude of the feedback current in the energy feedback state. The energy feedback state includes a brake mode and a freewheeling mode; and the feedback current generated in the freewheeling mode is fed back to the battery pack.

## Description

### TECHNICAL FIELD

The present application relates to the technical field of power tools and, in particular, to a sawing tool and a power tool.

### BACKGROUND

During the braking process, the power tool usually brakes by short-circuiting the three phases of windings of the motor. In this braking manner, too large a braking force is generated, and the huge reverse energy backflow may damage the device and cause potential safety hazards. For example, when the braking force of a grinding tool is too large, the attachments on the tool may fly out, causing a safety accident.

At present, the power tool is controlled to brake in a soft braking manner using the feedback current, which has the advantages of a small braking current and a large braking force. The manner is widely adopted in large-inertia sawing products (such as a miter saw, a table saw, and the like). However, in the soft braking manner using the feedback current, a relatively large feedback current is generated, and too large a feedback current for braking damages the battery pack and affects the service life of the battery pack.

This part provides background information related to the present application, and the background information is not necessarily the existing art.

### SUMMARY

An object of the present application is to solve or at least alleviate part or all of the preceding problems. Therefore, an object of the present application is to provide a sawing tool and a power tool to achieve reliable braking of a motor.

According to one aspect of the present application, a sawing tool is provided. The sawing tool includes a motor, a battery pack, and a control circuit. The motor includes a rotor and multiple phases of stator windings. The battery pack supplies power to at least the motor. The control circuit is used for controlling the motor to rotate or brake. The control circuit includes a driver circuit and a controller. The driver circuit includes multiple high-side switching elements and multiple low-side switching elements. The controller is electrically connected to at least the driver circuit and outputs a control signal to control the states of the multiple high-side switching elements and the multiple low-side switching elements. In response to a brake signal, the driver circuit is controlled to operate in an energy feedback state and the duty cycle of the control signal is adjusted to adjust the magnitude of the feedback current in the energy feedback state. The energy feedback state includes a brake mode and a freewheeling mode; and the feedback current generated in the freewheeling mode is fed back to the battery pack.

In an example, the magnitude of the duty cycle of the control signal is positively correlated with the magnitude of the feedback current.

In an example, the controller is further configured to perform the operation below. The duty cycle of the control signal is adjusted to generate a constant feedback current during the braking process of the motor.

In an example, the controller is further configured to perform the operation below. The duty cycle of the control signal is reduced in the case where the feedback current is greater than a current threshold.

In an example, the controller is further configured to perform the operation below. The duty cycle of the control signal is increased in the case where the feedback current is less than or equal to a current threshold.

In an example, the controller is further configured to perform the operation below. In the case where the feedback current is less than or equal to a current threshold, the duty cycle of the control signal is adjusted according to a variation curve of a preset duty cycle.

In an example, the controller is further configured to perform the operation below. The duty cycle of the control signal is adjusted according to a variation curve of a preset duty cycle.

In an example, the controller includes a proportional-integral (PI) controller. According to another aspect of the present application, a sawing tool is further provided. The sawing tool includes a motor, a battery pack, and a control circuit. The motor includes a rotor and multiple phases of stator windings. The battery pack supplies power to at least the motor. The control circuit is used for controlling the motor to rotate or brake. The control circuit includes a driver circuit and a controller. The driver circuit includes multiple high-side switching elements and multiple low-side switching elements. The controller is electrically connected to at least the driver circuit and outputs a control signal to control the states of the multiple high-side switching elements and the multiple low-side switching elements. In response to a brake signal, the driver circuit is controlled to operate in an energy feedback state and the duty cycle of the control signal is adjusted to adjust the magnitude of the feedback current in the energy feedback state.

According to another aspect of the present application, a power tool is further provided. The power tool includes a motor, a battery pack, and a control circuit. The motor includes a rotor and three phases of stator windings. The battery pack supplies power to at least the motor. The control circuit is used for controlling the motor to rotate or brake. The control circuit includes a driver circuit and a controller. The driver circuit includes multiple high-side switching elements and multiple low-side switching elements. The controller is electrically connected to at least the driver circuit and outputs a control signal to control the switching states of the switching elements. The controller is configured to perform the operation below. In response to a brake signal, the driver circuit is controlled to cyclically switch between a brake mode and a freewheeling mode to control the feedback current generated by the motor during the braking process to be not greater than a current threshold.

In an example, the controller controls the driver circuit to short-circuit the three phases of stator windings of the motor. In the freewheeling mode, the controller controls all the switching elements in the driver circuit to be disconnected.

In an example, the controller is configured to adjust the duty cycle of the control signal to control the motor to generate a constant feedback current during the braking process.

In an example, the controller is configured to adjust the duty cycle of the control signal according to a variation curve of a preset duty cycle.

In an example, the controller includes a PI controller.

In the sawing tool provided in the example of the present application, after receiving the brake signal, the controller controls the states of the switching elements in the driver circuit to control the feedback current generated by the motor during the braking process to be not greater than the current threshold so that the battery pack can be prevented from being damaged, thereby ensuring the service life of the battery pack while ensuring that the motor can brake successfully.

### BRIEF DESCRIPTION OF THE DRAWINGS

FIG. 1 is a view illustrating the structure of a sawing tool according to an example of the present application.
FIG. 2 is a circuit block diagram of a sawing tool according to an example of the present application.
FIG. 3 is a schematic diagram illustrating the short-circuit braking of three-phase motor windings according to an example of the present application.
FIG. 4 is another schematic diagram illustrating the short-circuit braking of three-phase motor windings according to an example of the present application.
FIG. 5 is a schematic diagram illustrating the normal operation of a driver circuit according to an example of the present application.
FIG. 6 is a schematic diagram illustrating the freewheeling mode of a driver circuit according to an example of the present application.
FIG. 7 is a graph of a variation curve of a preset duty cycle according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, Aand/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

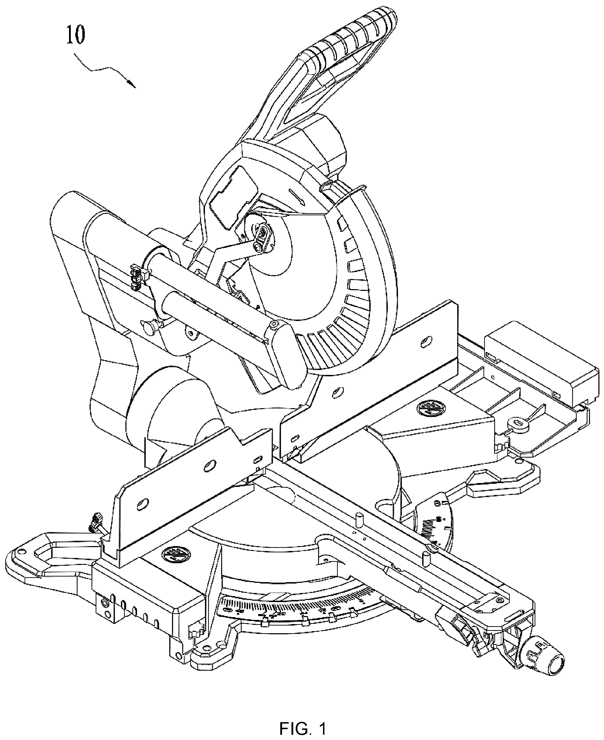

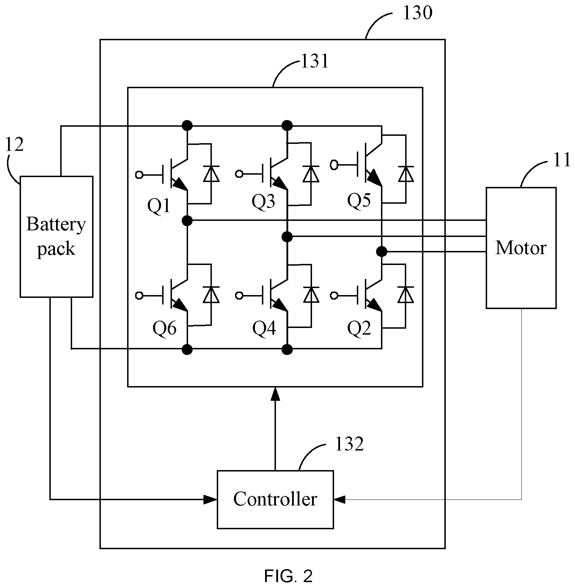

FIG. 1 is a view illustrating the structure of a sawing tool according to an example of the present application. A sawing tool 10 may be a table tool. Those skilled in the art should understand that the sawing tool provided in the present application is not limited to a miter saw and may also be a large-inertia sawing tool such as a table saw or a chainsaw or may be a power tool of another type. FIG. 2 is a circuit block diagram of a sawing tool according to an example of the present application. As shown in FIG. 2, the sawing tool 10 includes a motor 11 including a rotor and multiple phases of stator windings (for example, an A-phase winding, a B-phase winding, and a C-phase winding); a battery pack 12 supplying power to at least the motor 11; and a control circuit 130 for controlling the motor 11 to rotate or brake. The control circuit 130 includes a driver circuit 131 including multiple high-side switching elements (for example, Q1, Q2, and Q3) and multiple low-side switching elements (Q4, Q5, and Q6); and a controller 132 electrically connected to at least the driver circuit 131 and outputting a control signal to control the states of the high-side switching elements Q1, Q2, and Q3 and the low-side switching elements Q4, Q5, and Q6. The controller 132 is configured to: in response to a brake signal, control the driver circuit to operate in an energy feedback state and adjust the duty cycle of the control signal to adjust the magnitude of the feedback current in the energy feedback state. The duty cycle of the control signal is a proportion of the duration of the brake mode in a signal control cycle.

In an example, the motor 11 is a brushless direct current motor (BLDC). In an example, the motor 11 is a sensorless BLDC. In an example, the motor 11 is a sensored BLDC. In the present application, the BLDC may be an inrunner or an outrunner, and the motor includes at least three phases of stator windings A, B, and C in a star connection or a triangular connection.

The battery pack 12 may be formed by a group of battery cells. For example, the battery cells may be connected in series to form a single power supply branch to form a 1P battery pack. The output voltage of the battery pack 12 may be changed by a specific power supply control module such as a direct current-direct current (DC-DC) module such that a power supply voltage suitable for the control circuit 130, the motor 11, and the like is outputted for power supply. It is to be understood by those skilled in the art that the DC-DC module is a mature circuit structure and may be selected accordingly according to specific parameter requirements of the sawing tool.

The control circuit 130 may include the controller 132 and the driver circuit 131. The controller 132 controls the switching states of the switching elements in the driver circuit 131, thereby driving the motor 11 to rotate or brake.

The driver circuit 131 is electrically connected to the stator windings A, B, and C of the motor 11 and configured to transmit the current from the battery pack 12 to the stator windings A, B, and C to drive the motor 11 to rotate. In an example, the driver circuit 131 includes multiple high-side switching elements Q1, Q2, and Q3 and multiple low-side switching elements Q4, Q5, and Q6. A gate terminal of each switching element is electrically connected to the controller 132 and used for receiving the control signal from the controller 132, where the control signal may be a pulse-width modulation (PWM) signal. A drain or source of each switching element is connected to a stator winding A, B, or C of the motor 11. The switching elements Q1 to Q6 receive control signals from the controller 132 to change respective conduction states, thereby changing the current loaded to the stator windings A, B, and C of the motor 11 by the battery pack 12. In an example, the driver circuit 132 may be a three-phase bridge driver circuit including six controllable semiconductor power devices (such as fieldeffect transistors (FETs), bipolar junction transistors (BJTs), or insulated-gate bipolar transistors (IGBTs)). It is to be understood that the preceding switching elements may be any other types of solid-state switches, such as the IGBTs or the BJTs.

To drive the motor 11 to rotate, the driver circuit 131 has multiple driving states, and the motor 11 may have different rotational speeds or different directions of rotation in different driving states. In the present application, the process is not described in detail in which the controller 132 controls the driver circuit 131 to change different driving states such that the motor 11 has different rotational speeds or different directions of rotation.

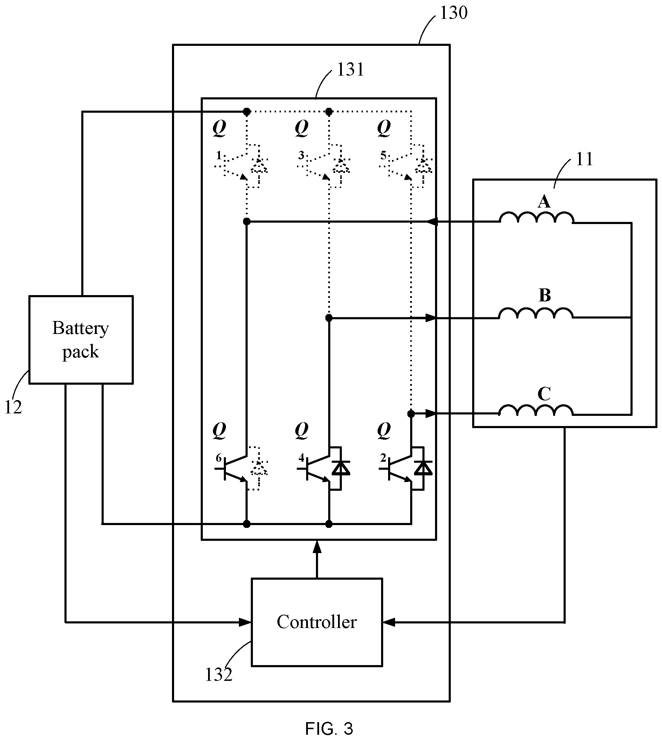

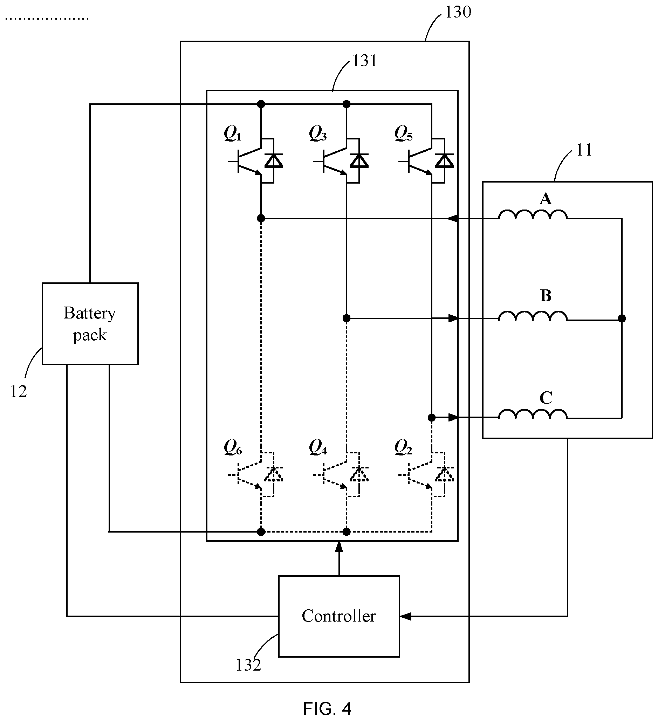

A common manner in which the controller 132 controls the driver circuit 131 to switch to a brake state to brake the motor 11 is to control the three phases of windings of the motor 11 to be short-circuited. FIG. 3 is a schematic diagram illustrating the short-circuit braking of three-phase motor windings according to an example of the present application. FIG. 4 is another schematic diagram illustrating the short-circuit braking of three-phase motor windings according to an example of the present application. In the figures, the dotted lines indicate disconnection, and the solid lines indicate connection. In FIGS. 3 and 4, in the driver circuit 131, the high-side switching elements Q1, Q3, and Q5 are all turned on and the low-side switching elements Q2, Q4, and Q6 are all turned off, or the low-side switching elements Q2, Q4, and Q6 are all turned on and the high-side switching elements Q1, Q3, and Q5 are all turned off. When braking in the preceding manner, the motor 11 has a large braking current and can obtain a large braking force. However, for some tools, a large braking force may cause some safety hazards, such as the possibility that the grinding disc of a grinding tool flies out.

To solve the preceding problem, the solutions below are adopted.

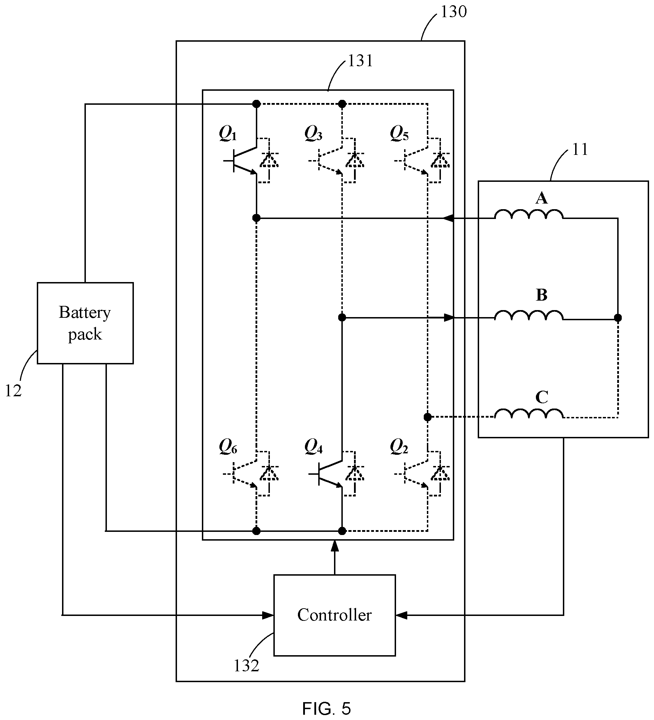

In an example, FIG. 5 is a schematic diagram illustrating the normal operation of a driver circuit according to an example of the present application. As shown in FIG. 5, during the normal operation of the motor 11, the switching elements Q1 and Q4 in the driver circuit 131 are turned on, the stator windings A and B are turned on, and the current flows into the motor windings after passing through the switching element Q1 from the power supply side so that the magnetic field in the windings changes and the motor rotates. In the preceding process, if the controller 132 detects the brake signal, the controller 132 may control the driver circuit 131 to switch from the current driving state to the energy feedback state in response to the brake signal.

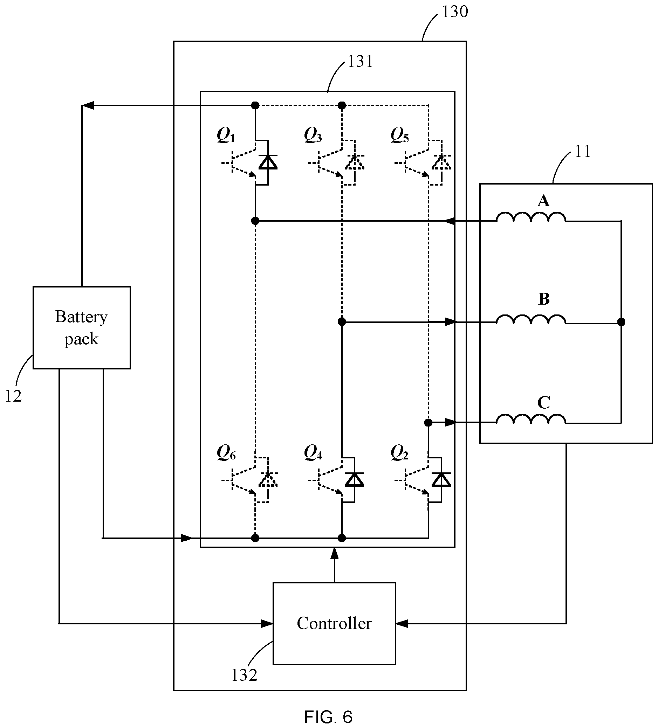

In an example, the energy feedback state includes a brake mode and a freewheeling mode. FIG. 6 is a schematic diagram illustrating the freewheeling mode of a driver circuit according to an example of the present application. Referring to FIGS. 3, 4, and 6, after detecting the brake signal, the controller 132 controls the driver circuit 131 to be in the brake mode shown in FIG. 3 or 4 to control the motor 11 to brake and stop and then controls the driver circuit 131 to be in the freewheeling mode shown in FIG. 6 to perform reverse charging using the braking current through the body diodes of the switching elements. For example, the feedback current generated in the freewheeling mode is fed back to the battery pack 12.

When the driver circuit 131 is controlled to operate in the energy feedback state, the magnitude of the feedback current may be detected in real time, and the magnitude of the feedback current may be adjusted by adjusting the duty cycle of the control signal, thereby preventing the battery pack 12 from being damaged due to too large a feedback current. The controller 12 includes a PI controller. The PI controller may monitor the feedback current and adjust the duty cycle of the control signal according to the feedback current, thereby adjusting the feedback current.

In an example, when the duty cycle of the control signal is 100%, it is to be understood that the switching elements in the driver circuit 131 are in the brake mode in which the high-side switching elements Q1, Q3, and Q5 are all turned on and the low-side switching elements Q2, Q4, and Q6 are all turned off, or the low-side switching elements Q2, Q4, and Q6 are all turned on and the high-side switching elements Q1, Q3, and Q5 are all turned off. When the duty cycle of the control signal is 0, all the switching elements in the driver circuit 131 are turned off and in the freewheeling mode. When the duty cycle of the control signal is 60%, it is to be understood that in a control cycle, the driver circuit 131 is in the brake mode for 60% of the cycle and in the freewheeling mode for 40% of the cycle. That is, the magnitude of the duty cycle of the control signal is directly related to the braking time required by the driver circuit 131. Unless otherwise specified, the duty cycle of the control signal in the examples of the present application is understood as explained above.

In the sawing tool provided in the examples of the present application, after receiving the brake signal, the controller controls the driver circuit to operate in the energy feedback state and adjusts the duty cycle of the control signal to adjust the magnitude of the feedback current in the energy feedback state so that the feedback current is not too large, thereby preventing the battery pack from being damaged. In this manner, while it can be ensured that the motor can brake successfully, the service life of the battery pack can be ensured.

In an example, the magnitude of the duty cycle of the control signal is positively correlated with the magnitude of the feedback current. In an example, when the controller brakes the motor in response to the brake signal and the initial rotational speed of the motor 11 during braking is greater than a rotational speed threshold, the duty cycle of the control signal during the braking process is positively correlated with the magnitude of the feedback current. That is to say, if the rotational speed of the motor 11 is lower at the initial moment of braking, for example, lower than the rotational speed threshold, the duty cycle of the control signal may be positively correlated with the feedback current in the initial stage of braking, but is no longer positively correlated with the feedback current subsequently.

Specifically, the larger the duty cycle of the control signal is, the longer the duration that the driver circuit 131 is in the brake mode is, and the larger the braking current generated at the same rotational speed of the motor is so that after the driver circuit 131 is switched from the brake mode to the freewheeling mode, the feedback current stored in the battery pack 12 and a storage module 134 in reverse is larger. Therefore, the magnitude of the feedback current may be adjusted by adjusting the duty cycle of the control signal.

In an example, the controller 132 is further configured to adjust the duty cycle of the control signal to generate a constant feedback current during the braking process of the motor.

Specifically, after receiving the brake signal, the controller 132 may detect the magnitude of the feedback current in real time when the driver circuit 131 is in the freewheeling mode. When the feedback current is too large, the duty cycle of the control signal is adjusted in time such that the duty cycle of the control signal decreases to decrease the feedback current to less than or equal to a current threshold. In this manner, a constant feedback current can be generated during the braking process of the motor 11. The current threshold may be the maximum allowable braking current that does not cause damage to the battery pack.

In an example, the controller is further configured to reduce the duty cycle of the control signal in the case where the feedback current is greater than the current threshold.

Specifically, by reducing the duty cycle of the control signal, the proportion of the duration of the brake mode in a signal control cycle can be reduced, thereby reducing the braking current and reducing the feedback current of the driver circuit 131 after switching from the brake mode to the freewheeling mode. Therefore, the duty cycle of the control signal may be reduced when the feedback current is greater than the current threshold, thereby preventing the battery pack from being damaged due to too large a feedback current in the freewheeling mode.

In an example, the controller 132 is further configured to increase the duty cycle of the control signal in the case where the feedback current is less than or equal to the current threshold.

Specifically, by reducing the duty cycle of the control signal, the proportion of the duration of the brake mode in a signal control cycle can be reduced, thereby increasing the braking current and increasing the feedback current of the driver circuit 131 after switching from the brake mode to the freewheeling mode. Therefore, the duty cycle of the control signal may be increased when the feedback current is less than the current threshold so that the feedback current generated during the braking process of the motor is constant.

In an example, in another preferred example, the controller 132 is further configured to: in the case where the feedback current is less than or equal to the current threshold, adjust the duty cycle of the control signal according to a variation curve of a preset duty cycle.

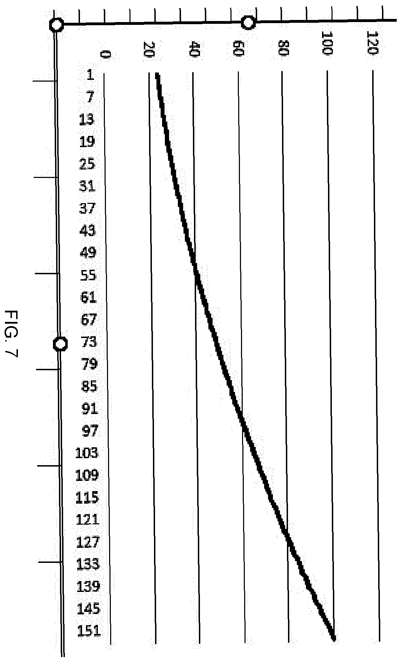

Specifically, when the feedback current is less than the current threshold, the variation curve of the preset duty cycle may be acquired. FIG. 7 is a graph of a variation curve of a preset duty cycle according to an example of the present application. As shown in FIG. 7, in the variation curve of the preset duty cycle, after the brake signal is acquired, the duty cycle of the control signal is positively correlated with time, that is, the longer the time has elapsed since the brake signal was acquired, the greater the duty cycle of the control signal is, thereby slowly increasing the braking current to control the motor to stop rotating. Therefore, after the brake signal is acquired, the duty cycle of the control signal may be adjusted according to the variation curve of the preset duty cycle, thereby controlling the motor 11 to brake. When the feedback current is greater than the current threshold, the duty cycle of the control signal may be directly reduced to reduce the feedback current in the freewheeling mode, thereby making the feedback current constant.

In an example, in another preferable example, the controller 132 is further configured to adjust the duty cycle of the control signal according to the variation curve of the preset duty cycle. In this manner, after the brake signal is acquired, the duty cycle of the control signal may be adjusted directly according to the variation curve of the preset duty cycle until the motor 11 is controlled to stop rotating.

Based on the same inventive concept, the example of the present application further provides a power tool. The power tool provided in the present application may be a miter saw, a table saw, a chainsaw, or another large-inertia sawing tool or may be an angle grinder, an electric drill, a handheld electric drill, or a power tool of another type. For example, the power tool may be a riding mower, an electric drill, a string trimmer, or a blower. Alternatively, the power tool may be a handheld power tool, for example, a drill, a hedge trimmer, or a sander. Alternatively, the power tool may be another table tool, for example, a table saw, a metal cutter, or an electric router. Alternatively, the power tool may be a push power tool, for example, a push mower or a push snow thrower. Alternatively, the power tool may be a riding power tool, for example, a riding mower, a riding vehicle, or an all-terrain vehicle. Alternatively, the power tool may be a robotic tool, for example, a robotic mower or a robotic snow thrower. In some examples, the power tool may be an electric drill, an electric lamp, an electric vehicle, or the like. In some examples, the power tool may be a garden tool, for example, a hedge trimmer, a blower, a mower, or a chainsaw. Alternatively, the power tool may be a decorating tool, for example, a screwdriver, a nail gun, a circular saw, or a sander. In some examples, the power tool may be a vegetation care tool, for example, a string trimmer, a mower, a hedge trimmer, or a chainsaw. Alternatively, the power tool may be a cleaning tool, for example, a blower, a snow thrower, or a cleaning machine. Alternatively, a power tool 200 may be a drilling tool, for example, a drill, a screwdriver, a wrench, or an electric hammer. Alternatively, the power tool may be a sawing tool, for example, a reciprocating saw, a jigsaw, or a circular saw. Alternatively, the power tool may be a sanding tool, for example, an angle grinder or a sander. Alternatively, the power tool may be another tool, for example, a lamp or a fan.

Referring to FIG. 2, the power tool includes the motor 11 including a rotor and three phases of stator windings; the battery pack 12 supplying power to at least the motor 11; and the control circuit 130 for controlling the motor 11 to rotate or brake. The control circuit 130 includes the driver circuit 131 including multiple high-side switching elements and multiple low-side switching elements; and the controller 132 electrically connected to at least the driver circuit 131 and outputting the control signal to control the switching states of the switching elements. The controller 132 is configured to: in response to the brake signal, at least control the feedback current generated by the motor 11 during the braking process to be not greater than the current threshold.

In the sawing tool provided in the example of the present application, after receiving the brake signal, the controller controls the states of the switching elements in the driver circuit to control the feedback current generated by the motor during the braking process to be not greater than the current threshold so that the battery pack can be prevented from being damaged, thereby ensuring the service life of the battery pack while ensuring that the motor can brake successfully.

In an example, in a preferred example, the controller 132 is specifically configured to: in response to the brake signal, control the driver circuit to cyclically switch between the brake mode and the freewheeling mode. In this manner, the braking force can be adjusted, and the feedback current can be limited to a range not greater than the current threshold.

For example, in the brake mode, the controller 132 controls the driver circuit 131 to short-circuit the three phases of stator windings of the motor 11, that is, the low-side switching elements Q2, Q4, and Q6 are all turned on and the high-side switching elements Q1, Q3, and Q5 are all turned off as shown in FIG. 4, or the high-side switching elements Q1, Q3, and Q5 are all turned on and the low-side switching elements Q2, Q4, and Q6 are all turned off. In the freewheeling mode, the controller 132 controls all the switching elements in the driver circuit to be disconnected.

In an example, in another preferred example of the present application, the controller 132 is configured to adjust the duty cycle of the control signal to control the motor 11 to generate a constant feedback current during the braking process, thereby ensuring that the battery pack 12 is prevented from being damaged due to too large a feedback current.

In an example, in another preferable example of the present application, the controller 132 is configured to adjust the duty cycle of the control signal according to the variation curve of the preset duty cycle. The variation curve of the preset duty cycle may be a curve shown in FIG. 8. The braking current slowly increases, thereby braking the motor 11 while ensuring that the battery pack 12 is not damaged by overcurrent.

In an example, the controller 12 may include a PI controller so that the PI controller monitors the feedback current and adjusts the duty cycle of the control signal, thereby adjusting the feedback current.

The basic principles, main features, and advantages of the present application are shown and described above. It is to be understood by those skilled in the art that the preceding examples do not limit the present application in any form, and all technical solutions obtained through equivalent substitutions or equivalent transformations fall within the scope of the present application.

## Claims

1. A power tool, comprising:
a motor (11) comprising a rotor and a plurality of phases of stator windings;
a battery pack (12) supplying power to at least the motor; and
a control circuit (13) for controlling the motor to rotate or brake;
wherein the control circuit comprises:
a driver circuit (131) comprising a plurality of high-side switching elements and a plurality of low-side switching elements; and
a controller (132) electrically connected to at least the driver circuit and outputting a control signal to control states of the plurality of high-side switching elements and the plurality of low-side switching elements;
wherein the controller is configured to:
in response to a brake signal, control the driver circuit to operate in an energy feedback state and adjust a duty cycle of the control signal to adjust a magnitude of a feedback current in the energy feedback state;
wherein the energy feedback state comprises a brake mode and a freewheeling mode;
and the feedback current generated in the freewheeling mode is fed back to the battery pack.

2. The power tool of claim 1, wherein a magnitude of the duty cycle of the control signal is positively correlated with the magnitude of the feedback current.

3. The power tool of claim 1, wherein the controller is further configured to:
adjust the duty cycle of the control signal to generate a constant feedback current during a braking process of the motor.

4. The power tool of claim 1, wherein the controller is further configured to:
reduce the duty cycle of the control signal in a case where the feedback current is greater than a current threshold.

5. The power tool of claim 1, wherein the controller is further configured to:
increase the duty cycle of the control signal in a case where the feedback current is less than or equal to a current threshold.

6. The power tool of claim 1, wherein the controller is further configured to:
in a case where the feedback current is less than or equal to a current threshold, adjust the duty cycle of the control signal according to a variation curve of a preset duty cycle.

7. The power tool of claim 1, wherein the controller is further configured to:
adjust the duty cycle of the control signal according to a variation curve of a preset duty cycle.

8. The power tool of claim 1, wherein the controller comprises a proportional-integral (PI) controller.

9. The power tool of claim 1, wherein the duty cycle of the control signal is a proportion of the duration of the brake mode in a signal control cycle.

10. The power tool of claim 1, wherein when the driver circuit is in the brake mode, the plurality of high-side switching elements are all turned on and the plurality of low-side switching elements are all turned off, or the plurality of low-side switching elements are all turned on and the plurality of high-side switching elements are all turned off.

11. The power tool of claim 1, wherein when the driver circuit is in the freewheeling mode, the controller is configured to reverse charge the battery pack by using a braking current flowing through body diodes of the plurality of high-side switching elements and the plurality of low-side switching element.

12. The power tool of claim 1, wherein the power tool is a sawing tool (10).

13. The power tool of claim 1, wherein the controller is further configured to:
in response to the brake signal, control the driver circuit to cyclically switch between the brake mode and the freewheeling mode to control the feedback current generated by the motor during a braking process to be not greater than a current threshold.

14. The power tool of claim 1, wherein in the brake mode, the controller controls the driver circuit to short-circuit the three phases of stator windings of the motor; and
in the freewheeling mode, the controller controls all the switching elements in the driver circuit to be disconnected.
